# EUROPEAN PATENT APPLICATION

(11) **EP 4 660 507 A1**
(43) Date of publication of application: **10.12.2025**
(21) Application number: 24382609.6
(22) Date of filing: 05.06.2024
(51) Int. Cl.: F16L 27/08, F16L 39/00, B33Y 80/00

(54) **GIMBAL JOINT FOR HIGH-PRESSURE FLUID DUCTS**

(71) Applicant: ITP Externals, S.L., 48160 Derio (Vizcaya) (ES)
(72) Inventor: Beltrán París, Paco, 48160 Derio (Vizcaya) (ES); Recuero González, Angel, 48160 Derio (Vizcaya) (ES); Edurne, Cabezón Bilbao, 48170 Zamudio (Vizcaya) (ES); Olabarrieta Crespo, Ander, 48170 Zamudio (Vizcaya) (ES); Hugo Alfonso, Carmona Orvañanos, 76120 Querétaro (MX)
(74) Representative: Clarke, Modet y Cía., S.L.

(57) **Abstract**

An object of the invention is a gimbal joint for high-pressure fluid ducts, with two clevises (4a,4b) to be sealedly coupled to two ducts (2a,2b). The gimbal joint has a bellows (3) between the clevises (4a,4b) to form a fluid-tight gas passage between both ducts (2a,2b), and a central gimbal ring (6) to be placed between both clevises (4a,4b), connected to the clevises by means of pins, providing a relative rotation between the clevises (4a,4b) and the central gimbal ring (6). The central gimbal ring (6) is hollow. Another object of the present invention is a gimbal joint for high-pressure fluid ducts (2a,2b) with two concentric passages (13,14), including two clevises (4a,4b) to be sealedly coupled to both ducts (2a,2b), a central gimbal ring (6) and two concentric bellows (3,15) between the clevises (4a,4b) to form fluid-tight gas concentric passages between both ducts (2a,2b).

## Description

### Field of the invention

The present invention belongs to the field of fluid ducting, specifically to joints for high pressure fluid ducting, for example in the field of aeronautics, aircrafts or spacecrafts, but also in other fields in which sealed gimbal joint assemblies are required for flexibly connecting ducts transmitting high temperature and high pressure fluids. The present invention relates to a gimbal joint for high-pressure fluid ducts, which provides sufficient structural integrity and flexibility for the joint, further reducing the weight of the entire joint.

### Background

Fluid ducting are used to convey high temperature and high pressure fluids in fields like aeronautic, aircrafts, spacecrafts or other fields requiring high diameter ducts and sealed joint assemblies. These joint assemblies must provide flexibility to enable said joints to withstand loads, vibrations, stresses, and further allowing the joints to turn.

One example of these sealed flexible joint assemblies is a ball joint, which allows a turning of one of the ducts relative to the other. A bellow can be sealed to the ends of the ball joint to provide a sealed fluid-tight fluid passage between both ducts along the center of the ball joint. Although these ball joint systems can provide a wide relative turning range between ducts, they require greats amount of material to provide resistance to withstand loads and vibrations.

An alternative known means to provide flexibility to the joint is a gimbal joint, including a bellows forming a fluid-tight passage at the joint between ducts, and a pair of clevises coupled to a central gimbal ring, or similar embodiments, which work mainly at torsion. These gimbal joints provide an adequate flexibility to the joint, preventing the expansion or displacement of the bellows, but at the same time allowing the rotation of the joint. These gimbal joints are structures composed of machined components of steel alloys, mainly Inconel° (IN718), although they could be others.

Documents US20220099225A1, US20210372547A1, US20200041050A1 and DE102007014949B4 show some of conventional gimbal embodiments.

Some of the drawbacks of these gimbal joints are that the machining of these elements provides a high amount of material waste with an associated cost, in the machining of the components, using eventually only a small percentage of the starting material. Moreover, there is a limitation of geometries of the elements to those competitively achievable by machining, and certain geometries that could be interesting are not carried out because they are not considered efficient for the machining process. So, there is little ability to optimize the geometry of those elements that can be made by machining. This further implies a lack of optimization of the thickness in different areas of the gimbal, preventing the manufacturing of the gasket in an efficient way. Additionally, the welding of the different components is made using high distortion techniques, as TIG.

Nevertheless, the main drawback of these conventional gimbal joints is the high weight thereof. The gimbal ring is a solid and filled one, so it is a heavy ring, which gives the joints excessive weight, especially for certain applications, and it is a high drawback for certain fields such as aeronautics, aircrafts or spacecrafts.

It is therefore desirable a gimbal joint for high-pressure fluid ducts which provides an adequate flexibility to the joint, to prevent the expansion or displacement of the bellows, but at the same time to allow the rotation of the joint avoiding the drawbacks of the conventional current gimbal joints.

### Description of the invention

The present invention overcomes the drawbacks of the current intraoperative gimbal joints by means of a gimbal joint for high-pressure fluid ducts, having a first clevis to be sealedly coupled to a first duct, with first connecting through holes, and a second clevis to be sealedly coupled to a second duct, also with first connecting through holes. The gimbal joint has further a bellows placed between the first clevis and the second clevis forming a fluid-tight passage between both ducts to be joined. Additionally, the gimbal joint has a central gimbal ring to be placed between the first clevis and the second clevis, having second connecting through holes, and pins connecting the first connecting through holes of the clevises with the second connecting through holes of the central gimbal ring. These pins are configured to provide a relative rotation between the clevises and the central gimbal ring when the gimbal joint is in operation. Therefore, the gimbal joint prevents the expansion of the bellow, but it allows the rotation thereof, similar to a cardan configuration. According to this configuration, the clevises and the central gimbal ring are connected by means of the pins, but the clevises never touch the central gimbal ring.

The central gimbal ring is hollow, so it is lighter than conventional gimbal rings, since it lacks a large amount of heavy material from its interior. Moreover, in gimbal joints the central gimbal ring works mainly at torsion, and so, an annular section, with the largest possible radius, is more efficient than a solid circular section. Adapting said central gimbal ring to the available space results may lead to a hollow elliptical section.

With accord to a particular embodiment, the central gimbal ring is manufactured by means of additive manufacturing, which is the most optimum method to manufacture the hollow gimbal ring, allowing weight reduction, optimizing rigidities, and providing a configuration and operation more efficient than the one manufactured by conventional machining. Weight reduction matter is essential in aeronautics, since in this field weight is the most important requirement to take into account, and this manufacturing of the hollow gimbal ring by means of additive manufacturing provides the advantages of both weight reduction and easy manufacturing.

Further, according to different embodiments, the clevises may be made also by means of additive manufacturing.

With accord to a preferred embodiment, the bellows has flat ends, and the gimbal joint has a reinforcement collar placed on each flat end of the bellows, and a pair of liners internally concentric to the bellows. According to this specific configuration, each flat end of the bellows is sandwiched between an end of the liner and the reinforcement collar, and the ends of the liner are joined to the clevises. According to a particular embodiment, the ends of the liners are joined to the clevises by means of laser welding.

With accord to an alternative embodiment, the gimbal joint for high-pressure fluid ducts object of the present invention may just have a reinforcement collar placed on each flat end of the bellows. According to this specific configuration, the bellows will be directly joined to the clevises through said reinforcement collars. According to a particular embodiment of the invention, in this case the reinforcement collars are joined to the clevises by means of laser welding too.

According to a particular embodiment, the configuration of the gimbal joint may be such that the central gimbal ring remains concentric external to the clevises when the gimbal joint is mounted and in operation.

Alternatively, the configuration of the gimbal joint may be such that the clevises remain concentric external to the central gimbal ring when the gimbal joint is mounted and in operation.

Preferably, the central gimbal ring comprises a plurality of drainage orifices to allow dust to escape from the inside of said central gimbal ring during the manufacturing process of the gimbal ring, being said drainage orifices configured also to drain fluids when the gimbal joint is in use, in any position the gimbal may take, being the drainage orifices compatible with the structural integrity of the joint.

Further, according to a preferred embodiment, the clevises of the gimbal joint of the present invention may have an area with material reduction to reduce weight of the overall device. This material reduction is applied on the external surface of the clevises, and gives rise to stiffer sides, which redistribute loads to other elements as ducts or pins, which are joined to the clevises by welding. Consequently, all welding areas will have reduced mechanical strength, and will be affected by loads transmitted by the clevises. Therefore, in order to absorb loads and to reduce the load affecting the welding, the external surface of the clevises is corrugated by means of corrugation lines, consisting of projections and recesses on the surface of the clevises.

Therefore, this new gimbal architecture includes a hollow central ring and a clevis topological optimization, which have a significant impact on the weight of the ring while maintaining structural capacities, all through taking advantage of the possibilities offered by additive manufacturing and its integration through laser welding.

The use of additive manufacturing technology allows the shape of the elements of the gimbal joint to be optimized for the main loads, which in the case of the central ring are mainly torsion. So, the use of a hollow ring allows the weight to be optimized while maintaining structural capacity.

As a comparative example, the weight reduction the gimbal joint of the present invention regarding currently known gimbal joints may be up to 20%, maintaining the structural capacity the same.

Further, this gimbal joint provides an improvement of the final cost of the components compared to the cost of the machining conventional manufacture necessary to incorporate to included the required features.

Moreover, the use of additive manufacturing allows the shape of different components to be optimized, maintaining the essence of the invention.

Another object of the present invention is a gimbal joint configured to join specific ducts with double wall. Double-wall ducts have an internal main passage and an external annular passage, in such way that high temperature and high pressure fluid flows along the internal main passage of the duct.

Burst duct is a critical failure associated with duct systems for high pressure and temperature fluids. In case of failure in these duct systems due to any breakage of the duct, or any leak of the fluid, a gas with high pressure and temperature will be released to critical compartments, for example engine compartments.

These release of high pressure and temperature fluid will require expensive and heavy protection systems, for example overpressure release valves in engine compartments to prevent engine damage due to pressurization of the cavity and/or metal shields to prevent the impact of the air flow (up to 600C) on control cables , aluminum control valves, non-metallic elements, etc.

Double-wall ducts with an internal main passage and an external annular passage are considered "burst-proof" ducts, as they provide protection against the burst duct failure, since the high pressure fluid flows along the internal main passage, and in case of failure as a breakage or leak, the fluid will be contained within the external annular passage, this external annular passage will be pressurized and then the high pressure fluid will be expelled outside the engine chamber in a controlled manner

Similar to the stated above for conventional ducts, these "burst-proof' ducts also require flexible elements, for example gimbal joints, to accommodate displacement, inertia and maneuver loads transmitted by the high pressure fluid inside the ducts.

For these cases, another object of the present invention is a gimbal joint for high-pressure fluid ducts, including the following elements:
- A first clevis configured to be sealedly coupled to a first duct with an internal main passage and an external annular passage concentric to the internal main passage, the first clevis having first connecting through holes.
- A second clevis configured to be sealedly coupled to a second duct with an internal main passage and an external annular passage concentric to the internal main passage, the second clevis also having first connecting through holes.
- A bellows placed between the first clevis and the second clevis, having flat ends configured to be sealedly coupled to both clevises, the bellows forming a fluid-tight passage between the internal main passages of both ducts.
- A central gimbal ring, configured to be placed between the first clevis and the second clevis, having second connecting through holes.
- Pins connecting the first connecting through holes of both clevises with the second connecting through holes of the central gimbal ring and configured to provide a relative rotation between the clevises and the central gimbal ring when the gimbal joint is in use.
- And an additional bellows also placed between the first clevis and the second clevis, externally concentric to the central gimbal ring, having flat ends to be sealedly coupled to both clevises, in such way that this additional bellows forms with the bellows an additional chamber being a fluid-tight passage connected to the external annular passages of both ducts through a plurality of openings in both clevises.

Therefore, in order to provide a continuity solution to the double-wall ducts with double passage, according to another object of the invention, the gimbal joint also has an additional bellows externally concentric to the central gimbal ring and the bellows, providing an additional chamber formed by the bellows and the additional bellows, which is pressurized by the high pressure fluid in case of failure of the internal main passage.

According to this "double-bellow" of this gimbal joint, in case of failure of the primary bellow and/or other area of the internal main passage, the fluid will not be expelled into the engine chamber, since it will be contained in the external annular passage of the duct and the secondary chamber of the secondary bellow in the gimbal joint. So, the flexibility of the system will be maintained avoiding damage to external elements of the engine due to contact with high temperature and pression fluids. According to a particular embodiment of this "double bellows" gimbal joint, the central gimbal ring is hollow, so it is lighter than conventional gimbal rings, since it lacks a large amount of heavy material from its interior.

Similar to the single bellows approach, particularly, the central gimbal ring may be manufactured by means of additive manufacturing, which is the most optimum method to manufacture the hollow gimbal ring, allowing weight reduction, optimizing rigidities, and providing a configuration and operation more efficient than the one manufactured by conventional machining.

Further, according to different embodiments, the clevises may be made also by means of additive manufacturing.

With accord to a particular embodiment, the gimbal ring may have pressure measuring means inside the additional chamber or inside the external annular passage of the ducts, so that in case of failure of the system and the release of fluid inside the additional chamber, these pressure measuring means check and confirm that there is a real pressurization in said additional chamber, avoiding a leak of the fluid to critical elements. These pressure measuring means may be pressure sensors or pressure sense line connections.

### Brief description of the drawings

Next, in order to facilitate the comprehension of this disclosure, in an illustrative rather than limitative manner a series of embodiments with reference to a series of figures shall be made below.

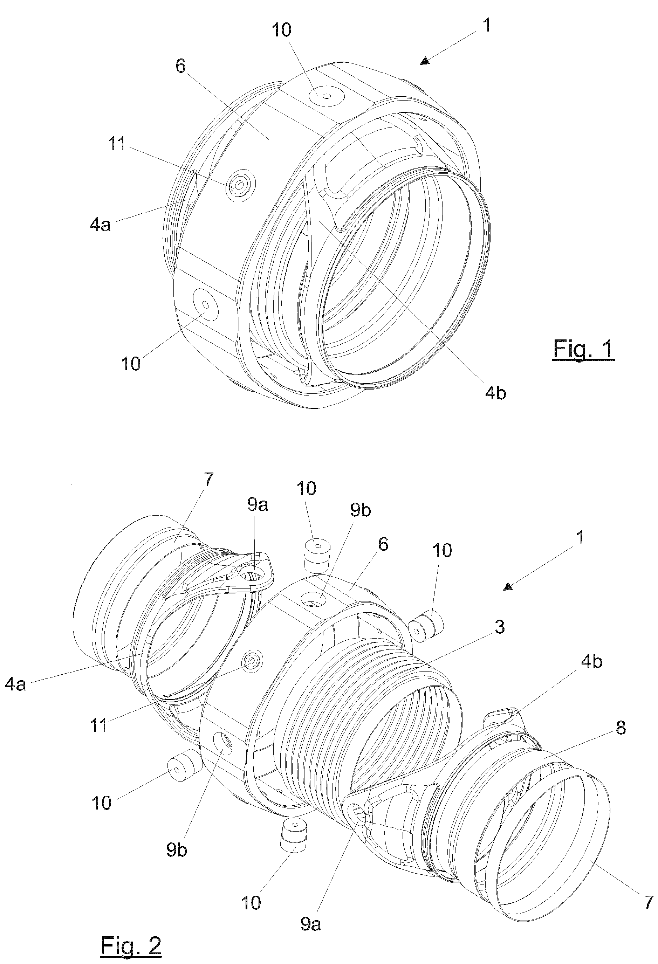

Figure 1 shows a perspective view of an embodiment of the gimbal joint of the present invention.
Figure 2 shows the gimbal joint of figure 1, in an exploded view, showing all components separately.
Figure 3 is a local perspective sectional view of the gimbal joint of figures 1 and 2.
Figure 4 is a perspective sectional view of the gimbal joint of figures 1 to 3,.
Figure 5 is a perspective view similar to figure 1, but the gimbal joint in use joining two ducts.
Figure 6 is a perspective sectional view of an embodiment of a gimbal joint joining two ducts, the ducts having two concentric passages, and the gimbal joint having two concentric bellows.
Figure 7a and 7b are partial views of a clevis of the present invention showing an area with material reduction and corrugation lines. Figure 7a is a partial perspective view, and figure 7b is a partial section view of the clevis.

These figures refer to the following set of elements:
- 1.: gimbal joint
- 2a.: first duct
- 2b.: second duct
- 3.: bellows
- 4a.: first clevis
- 4b.: second clevis
- 5.: flat ends of the bellows
- 6.: central gimbal ring
- 7.: reinforcement collar
- 8.: liner
- 9a.: first connecting through holes of the clevises
- 9b.: second connecting through holes of the central gimbal ring
- 10.: pins
- 11.: drainage orifices
- 12.: corrugation lines
- 13.: internal main passage of the ducts
- 14.: external annular passage of the ducts
- 15.: additional bellows
- 16.: additional chamber between bellows and additional bellows

### Detailed description

The present disclosure refers to a gimbal joint (1) for high pressure fluid ducts (2a,2b).

As it can be seen in the figures, the gimbal joint (1) has a first clevis (4a) to be sealedly coupled to a first duct (2a), including first connecting through holes (9a), and a second clevis (4b) to be sealedly coupled to a second duct (2b), also including first connecting through holes (9). The gimbal joint (1) has further a bellows (3), which is placed between the first clevis (4a) and the second clevis (4b), and provides a fluid-tight passage between both ducts (2a,2b) when they are joined. Additionally, as shown in the figures, the gimbal joint (1) has a central gimbal ring (6) placed between the first clevis (4a) and the second clevis (4b) and connecting them. The central gimbal ring (6) has second connecting through holes (9b), and there are pins (10) connecting the first connecting through holes (9a) of the clevises (4a,4b) with the second connecting through holes (9b) of the central gimbal ring (6). These pins (10) provide a relative rotation between the clevises (4a,4b) and the central gimbal ring (6) when the gimbal joint (1) is in operation.

This central gimbal ring (6) is hollow, so it is lighter than conventional gimbal rings, lacking a large amount of heavy material from its interior, as explained above.

With accord to a particular embodiment, the central gimbal ring (6) is made by means of additive manufacturing.

Further, according to different embodiments, the clevises (4a,4b) may be made also by means of additive manufacturing.

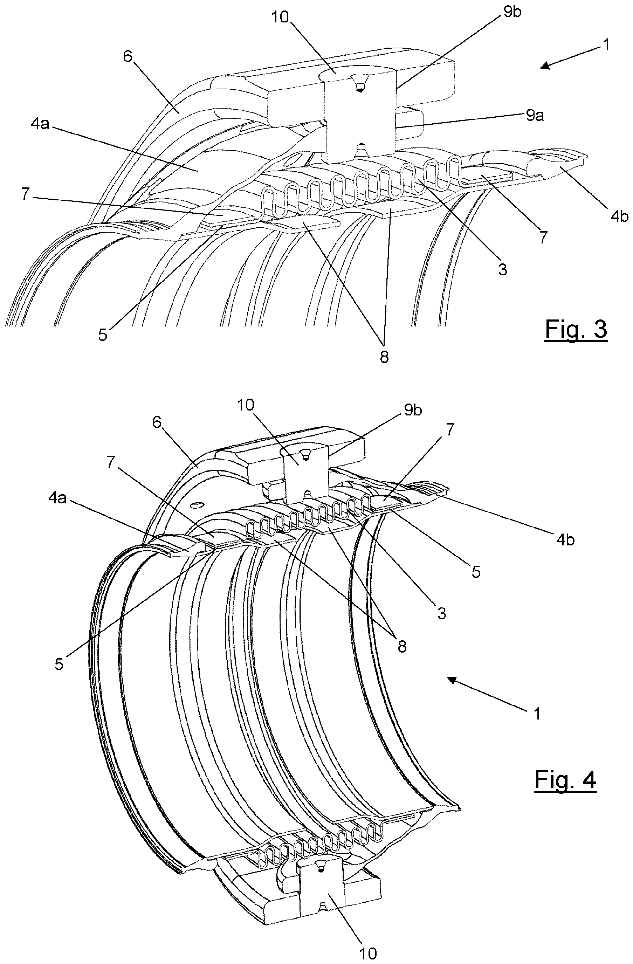

With accord to a preferred embodiment depicted in detail in figures 3 and 4, the bellows (3) has flat ends (5) and the gimbal joint (1) has a reinforcement collar (7) placed on each flat end (5) of the bellows (3), and a pair of liners (8) internally concentric to said bellows (3). According to this specific configuration, and as it can be seen in the figures, each flat end (5) of the bellows (3) is sandwiched between an end of the liner (8) and the reinforcement collar (7), and the ends of the liner (8) are joined to the clevises (4a,4b). According to a particular embodiment, the ends of the liners (8) are joined to the clevises (4a,4b) by means of laser welding.

The bellows (3) is made by cold forming to improve and increase its resistance, tension and elasticity. So, particularly, these laser weldings of liner (8)-bellows (3)-reinforcement collar (7) and liners (8)-clevises (4a,4b) use Inconel° 718 in precipitated state to avoid a heat treatment that could diminish these resistance, tension and elasticity, and could reduce useful life of the bellows (3).

According to different particular embodiments of the laser welding, a full penetration welding may be carried out for liner (8)-bellows (3)-reinforcement collar (7), and partial penetration welding may be carried out for liner (8)-clevises (4a,4b) or clevises (4a,4b)-pins (10).

With accord to an alternative embodiment not depicted in the figures, the gimbal joint for high-pressure fluid ducts object of the present invention may just have a reinforcement collar placed on each flat end of the bellows. According to this specific configuration, the bellows will be directly joined to the clevises through said reinforcement collars. According to a particular embodiment of the invention, in this case the reinforcement collars are joined to the clevises by means of laser welding too.

According to a particular embodiment, the configuration of the gimbal joint (1) may be such that the central gimbal ring (6) remains concentric external to the clevises (4a,4b) when the gimbal joint is mounted and in operation, as shown in the figures.

Alternatively, not shown in the figures, the configuration of the gimbal joint may be such that the clevises remain concentric external to the central gimbal ring when the gimbal joint is mounted and in operation.

Preferably, the central gimbal ring (6) comprises a plurality of drainage orifices (11) to allow dust to escape from the inside of said central gimbal ring (6) during the manufacturing process thereof, being said drainage orifices (11) configured also to drain fluids when the gimbal joint (1) is in use.

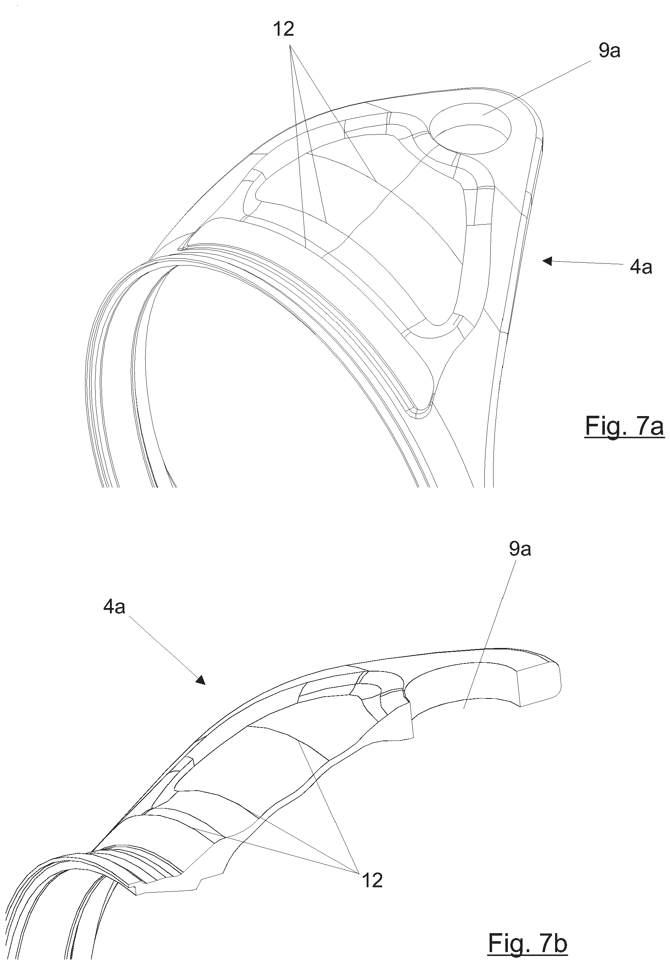

With regard to a preferred embodiment of the invention, the clevises (4a,4b) may have an area with material reduction to reduce weight of the overall device. This material reduction is applied on the external surface of the clevises (4a,4b), and gives rise to stiffer sides, which redistribute loads to other elements as ducts (2a,2b) or pins (10) joined to the clevises (4a,4b) by welding. Consequently, these welding areas will have reduced mechanical strength, and will be affected by loads transmitted by the clevises (4a,4b). Therefore, in order to absorb loads and to reduce the load affecting the welding, as shown in figures 7a and 7b, the external surface of the clevises (4a,4b) is corrugated by means of corrugation lines (12), consisting of projections and recesses on the surface of the clevises (4a,4b).

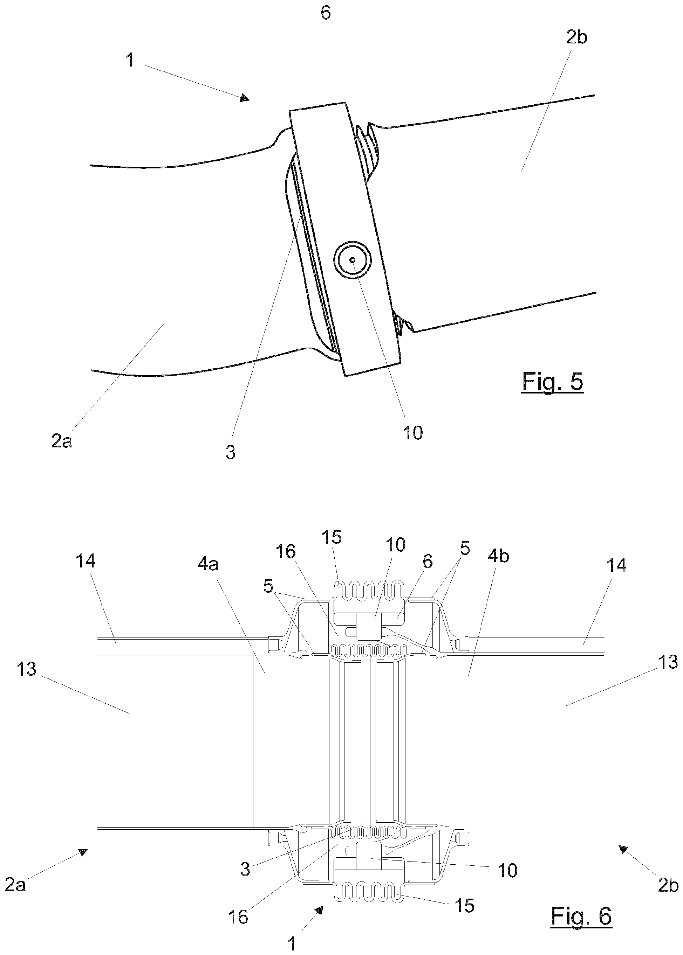

Another object of the present invention, shown in figure 6, is a gimbal joint of a double wall type, configured to join specific ducts (2a,2b) with double wall. Double-wall ducts (2a,2b) have an internal main passage (13) and an external annular passage (14), in such way that high temperature and high pressure fluid flows along the internal main passage (13) of the duct (2a,2b).

As explained above, double-wall ducts with an internal main passage (13) and an external annular passage (14) are "burst-proof" ducts, as they provide protection against the burst duct failure. The high pressure fluid flows along the internal main passage (13), and in case of failure as a breakage or leak, this high pressure fluid is contained within the external annular passage (14), which is pressurized, and then the high pressure fluid can be expelled outside the engine chamber in a controlled manner with no damage.

For these ducts (2a,2b), another object of the present invention is a gimbal joint (1), which is shown in figure 6, and includes a first clevis (4a) to be sealedly coupled to a first duct (2a) with an internal main passage (13) and an external annular passage (14) concentric to the internal main passage (13), and a second clevis (4b) to be sealedly coupled to a second duct (2b) also with an internal main passage (13) and an external annular passage (14) concentric to the internal main passage (13). Both first clevis (4a) and second clevis (4b) have first connecting through holes (9a). The gimbal joint (1) also has a bellows (3) between the first clevis (4a) and the second clevis (4b), with flat ends (5) to be sealedly coupled to both clevises (4a,4b), in such a way that the bellows (3) forms a fluid-tight passage between the internal main passages (13) of both ducts (2a,2b). Additionally, the gimbal joint (1) has a central gimbal ring (6) to be placed between the first clevis (4a) and the second clevis (4b), with second connecting through holes (9b), and pins (10) connecting the first connecting through holes (9a) of both clevises (4a,4b) with the second connecting through holes (9b) of the central gimbal ring (6), providing a relative rotation between the clevises (4a,4b) and the central gimbal ring (6) when the gimbal joint (1) is in use.

The gimbal joint (1) further has an additional bellows also placed between the first clevis and the second clevis, externally concentric to the central gimbal ring (6), having flat ends to be sealedly coupled to both clevises, in such way that this additional bellows forms with the bellows an additional chamber being a fluid-tight passage connected to the external annular passages (14) of both ducts (2a,2b) through a plurality of orifices in both clevises (4a,4b). As shown in figure 6, the gimbal joint (1) further has an additional bellows (15) externally concentric to the central gimbal ring (6) and to the bellows (3), which provides an additional chamber (16), which would be pressurized by high pressure flulid in case of failure of the internal main passage (13), and the flexibility of the system will be maintained avoiding damage to external elements of the engine due to contact with high temperature and pression fluids.

According to a particular embodiment of this "double bellows" gimbal joint (1), the central gimbal ring (6) is hollow, so it is lighter than conventional gimbal rings.

Similarly to the single bellows approach, the central gimbal ring (6) of this "double bellows" gimbal joint (1) particularly may be manufactured by means of additive manufacturing, which is the most optimum method to manufacture the hollow gimbal ring, allowing weight reduction, optimizing rigidities, and providing a configuration and operation more efficient than the one manufactured by conventional machining.

Further, according to different embodiments, the clevises (4a,4b) of the "double bellows" gimbal joint (1) may be made also by means of additive manufacturing.

With accord to a particular embodiment, the gimbal ring (1) may have pressure measuring means inside the additional chamber (16) or inside the external annular passage (14) of the ducts (2a,2b), so that in case of failure of the system and the release of fluid inside this additional chamber (16), the pressure measuring means check and confirm that there is a real pressurization. These pressure measuring means may be pressure sensors or pressure sense line connections.

## Claims

1. Gimbal joint for high-pressure fluid ducts, comprising
- a first clevis (4a) configured to be sealedly coupled to a first duct (2a), said first clevis (4a) having first connecting through holes (9a),
- a second clevis (4b) configured to be sealedly coupled to a second duct (2b), said second clevis (4b) having first connecting through holes (9a)
- a bellows (3) placed between the first clevis (4a) and the second clevis (4b), said bellows (3) configured to form a fluid-tight passage between both ducts (2a,2b),
- a central gimbal ring (6), configured to be placed between the first clevis (4a) and the second clevis (4b), having second connecting through holes (9b), and
- pins (10) connecting the first connecting through holes (9a) of the clevises (4a,4b) with the second connecting through holes (9b) of the central gimbal ring (6), configured to provide a relative rotation between the clevises (4a,4b) and the central gimbal ring (6) when the gimbal joint (1) in use,
**characterized in that** the central gimbal ring (6) is hollow.

2. Gimbal joint for high-pressure fluid ducts, according to claim 1, wherein the central gimbal ring (6) is made by means of additive manufacturing.

3. Gimbal joint for high-pressure fluid ducts, according to any of the previous claims, wherein the clevises (4a,4b) are made by means of additive manufacturing.

4. Gimbal joint for high-pressure fluid ducts, according to any of the previous claims, wherein the bellows has flat ends (5), and said gimbal joint comprises
- a reinforcement collar (7) placed on each flat end (5) of the bellows (3), and
- a pair of liners (8) internally concentric to the bellows (3),
each flat end (5) of the bellows (3) being sandwiched between an end of the liner (8) and the reinforcement collar (7), and the ends of the liners (8) being joined to the clevises (4a,4b).

5. Gimbal joint for high-pressure fluid ducts, according to claim 4, wherein the ends of the liners (8) are joined to the clevises (4a,4b) by means of laser welding.

6. Gimbal joint for high-pressure fluid ducts, according to any of claims 1 to 3, comprising a reinforcement collar (7) placed on each flat end (5) of the bellows (3), said reinforcement collars (7) being joined to the clevises (4a,4b).

7. Gimbal joint for high-pressure fluid ducts, according to claim 6, wherein the reinforcement collars (7) are joined to the clevises (4a,4b) by means of laser welding.

8. Gimbal joint for high-pressure fluid ducts, according to any of the previous claims, wherein the central gimbal ring (6) is concentric external to the clevises (4a,4b) when the gimbal joint (1) in use.

9. Gimbal joint for high-pressure fluid ducts, according to any of the claims 1 to 7, wherein the clevises (4a,4b) are concentric external to the central gimbal ring (6) when the gimbal joint (1) in use.

10. Gimbal joint for high-pressure fluid ducts, according to any of the previous claims, wherein the central gimbal ring (6) comprises a plurality of drainage orifices (11) configured to allow dust to escape from the inside of said central gimbal ring (6) during the manufacturing process of the gimbal ring (6) and to drain fluids when the gimbal joint (1) in use.

11. Gimbal joint for high-pressure fluid ducts, according to any of the previous claims, wherein the clevises (4a, b) comprise a material reduction area configured to reduce weight, and the external surface of the clevises (4a,4b) is corrugated to absorb loads.

12. Gimbal joint for high-pressure fluid ducts, **characterized in that** it comprises
- a first clevis (4a) configured to be sealedly coupled to a first duct (2a) comprising an internal main passage (13) and an external annular passage (14) concentric to the internal main passage (13), said first clevis (4a) having first connecting through holes (9a),
- a second clevis (4b) configured to be sealedly coupled to a second duct (2b) comprising an internal main passage (13) and an external annular passage (14) concentric to the internal main passage (13), said second clevis (4b) having first connecting through holes (9a)
- a bellows (3) placed between the first clevis (4a) and the second clevis (4b), configured to form a fluid-tight passage between the internal main passages (13) of both ducts (2a,2b),
- a central gimbal ring (6), configured to be placed between the first clevis (4a) and the second clevis (4b), having second connecting through holes (9b),
- pins (10) connecting the first connecting through holes (9a) of the clevises (4a,4b) with the second connecting through holes (9b) of the central gimbal ring (6), configured to provide a relative rotation between the clevises (4a,4b) and the central gimbal ring (6) when the gimbal joint (1) in use,
- and an additional bellows (15) placed between the first clevis (4a) and the second clevis (4b), externally concentric to the central gimbal ring (6), having flat ends (5) configured to be sealedly coupled to both clevises (4a,4b), said additional bellows (15) forming with the bellows (3) an additional chamber (16) being a fluid-tight passage connected to the external annular passages (14) of both ducts (2a,2b) through a plurality of openings in both clevises (4a,4b).

13. Gimbal joint for high-pressure fluid ducts, according to claim 12, wherein the central gimbal ring (6) is hollow.

14. Gimbal joint for high-pressure fluid ducts, according to any of claims 12 or 13, which comprises pressure measuring means placed inside the additional chamber (16) or inside the external annular passage (14) of the ducts (2a,2b).

15. Gimbal joint for high-pressure fluid ducts, according to any of claims 12 to 14, wherein the clevises (4a,4b) and/or the central gimbal ring (6) are made by means of additive manufacturing.
